# EUROPEAN PATENT APPLICATION

(11) **EP 3 587 241 A1**
(43) Date of publication of application: **01.01.2020**
(21) Application number: 19182957.1
(22) Date of filing: 27.06.2019
(51) Int. Cl.: B63J 4/00, B01D 35/05, B01D 39/20, B01D 17/02, B63B 13/00

(54) **BILGE WATER CLEANING**

(30) Priority: 28.06.2018 GB 201810660; 18.07.2018 GB 201811758
(71) Applicant: River Canal Rescue Limited, Stafford, Staffordshire ST18 0YJ (GB)
(72) Inventor: Forman, J William, Stafford, Staffordshire ST180YJ (GB)
(74) Representative: Swindell & Pearson Limited

(57) **Abstract**

A filter apparatus (26) for the cleaning of hydrocarbons from bilge water (18) whilst that bilge water is being discharged from a boat (2) is disclosed. The filter apparatus comprises a filter media (60) and a filter housing (50), characterised in that the filter media is buoyant, the filter media is sorbent of hydrocarbons, and or the filter media renders the hydrocarbons non-reactive, the filter media is contained within the filter housing, and the filter apparatus is configured so that untreated bilge water may flow into the filter housing via a housing inlet (52), through the filter media, and out of the filter housing via a housing outlet (54).

## Description

This invention relates to bilge water cleaning, in particular to apparatus and a method for cleaning or removing hydrocarbons from bilge water before discharge of that bilge water from a boat, ship or watercraft.

It is known that boats, ships or watercraft (collectively referred to as "boats") tend, over time, to collect water within their hull. The water generally collects in a designated part of the hull which is known as the bilge. It is often the case that provision is made in the construction of the hull that water entering the hull will be fed to the bilge.

The size of a bilge in a particular boat will depend on the size of the boat. Small boats such as narrow boats, leisure boats, river cruisers, barges, canal boats, and any leisure craft which may hold bilge water contents will have bilges of smaller volume than big boats. It is generally the case that the smaller the bilge the more frequently it will need to be emptied.

Where a boat includes one or more petrol or diesel engine (whether for use for propulsive power or other power), or other mechanisms that are lubricated using oil or other hydrocarbon based lubricants, it is likely that the content of the bilge will include water and hydrocarbons, for example oil, diesel, solvents, and or grease. This mixture is known as bilge water.

It is not uncommon for bilge water to have hydrocarbon concentrations of up to 10% by weight. Where there is an oil or fuel spill the concentration may be higher.

It is desirable for the bilge water to be discharged from the hull for various reasons unconnected to the present application. Historically, this discharge has been performed by pumping the bilge water out of the bilge and directly into whatever environment the boat is in. A bilge pump and one or more conduits collectively create a flow path between the bilge and a bilge water discharge point to allow this to occur. As a result, any hydrocarbons in the bilge water have historically been pumped out into the environment.

The environment that the bilge water is likely to be pumped into may be a canal, river, lake, or the sea. It is now known that it is environmentally damaging to discharge hydrocarbons in to any of those environments and, in many countries, it is an offence to do so. The problem often faced by boaters, however, is a lack of facilities for the discharge of bilge water into a suitable receptacle where the hydrocarbons can be removed from the bilge water before the cleaned water is released into the environment. Even when a suitable receptacle can be located, removal of the hydrocarbon contaminated bilge water to the receptacle still poses a significant risk to the environment because incorrect transfer to the receptacle and or accidental spillage can still cause significant damage to the environment as a result of hydrocarbon contamination.

According to a first aspect of the present invention there is provided filter apparatus for the cleaning of hydrocarbons from bilge water whilst that bilge water is being discharged from a boat comprising a filter media and a filter housing, characterised in that the filter media is buoyant, the filter media is sorbent of hydrocarbons, the filter media is contained within the filter housing, and the filter apparatus is configured so that untreated bilge water may flow into the filter housing via a housing inlet, through the filter media, and out of the filter housing via a housing outlet.

In some embodiments of the present invention the filter media is such that sorption of hydrocarbons by the filter media renders the hydrocarbons non-reactive with the environment.

The water flowing out of the housing outlet is cleaned water with no or acceptable levels of hydrocarbon contamination. The cleaned water can then be discharged into the environment without environmental damage. This has the advantage that only the environmentally damaging hydrocarbons are retained on the boat thus minimising the volume of material retained on the boat and to be subsequently disposed of. This also has the advantage that the hydrocarbons are fixed into the filter media in a permanently non-reactive state and are thus easier to remove from the boat when appropriate and to dispose of safely.

A further advantage of the present invention is that sorption of hydrocarbons by the filter media renders the hydrocarbons non-reactive which has the effect that transport and disposal of the filter media / hydrocarbons mixture is easy and safe.

The filter media may be comprised of at least one material absorbent of hydrocarbons, at least one material adsorbent of hydrocarbons, or a mixture of at least one a material absorbent of hydrocarbons and at least one material adsorbent of hydrocarbons.

In some embodiments of the present invention the filter media is hydrophobic.

In some embodiments the filter media may be comprised of a support material and an absorbent and or adsorbent material coated onto the support material. In some embodiments the support material is comprised of elements which are one of grains, fibres, or constructed from a three-dimensional matrix of material. In some embodiments the support material is comprised of elements which are a mixture of grains, fibres, or constructed from three-dimensional matrices of material.

Materials that are absorbent and or adsorbent of hydrocarbons are known and may be used as the filter media in the present invention if they are configured to be buoyant in bilge water and or render the hydrocarbons non-reactive. A non-limiting example of such a filter media comprises one or more of calcium carbonate, calcium oxide, bentonite clay, starch, aluminium oxide and a binder. In some embodiments the binder may be a bitumenous material, for example bitumen. In other embodiments alternative binders may be employed.

In some embodiments of the present invention the filter media is a silica sand coated with a mixture of calcium carbonate, calcium oxide, bentonite clay, starch, aluminium oxide and bitumen. This material is hydrophobic and adsorbent of hydrocarbons. An example of such a filter media is sold under the trade name Harena (available from GPC Clear Solutions Limited of the United Kingdom).

In some embodiments of the invention, the filter media is compostable. Composting may then be used to dispose of the filter media / hydrocarbons once the hydrocarbon absorption / adsorption capacity of the filter media has been reached. In some other embodiments of the invention the filter media may be disposed of by combustion, this may be advantageous because the energy from the hydrocarbons may be extracted if combustion occurs in the right conditions. In some other embodiments the filter media may be safely reusable as a construction material such as, for example, an alternative aggregate for use in the construction industry.

The filter media is preferably particulate, granular or of similar shape so that each element of the filter media, when floating within the filter housing when there is water within the filter housing, has at least some degree of movement relative to other elements of the filter media.

The buoyancy of the filter media is advantageous because it has the result that when the bilge water flows through the filter media the buoyancy of that filter media will have the effect of preventing the filter media compacting and becoming resistant to the flow of the bilge water. In some embodiments, the filter apparatus is so configured that when it is in use, the housing inlet is vertically lower than the housing outlet. This arrangement will further prevent clumping or compacting of the filter media.

The buoyancy of the filter media has the further advantage that it is not desirable for the apparatus of the present invention to filter anything other than hydrocarbons out of the bilge water. In particular, it is not desired for the filter media to remove fine particulates such as small biological material, silt or the like from the bilge water. This is important because the composition of bilge water is often reflective of the composition of the water in which the boat is floating. In navigable inland waterways, there may be expected to be small biological material and or silt in the water in which the boat is floating. That biological material or silt may be discharged from the boat back into the waterway without harm. If that material or silt is filtered out of the bilge water the filter may soon become clogged and need replacing or back washing. In contrast, not filtering it out of the bilge water will lengthen the life of the filter media or period of time between the need to change the filter media.

A further advantage of the buoyancy of the filter media is that because it will not clump together, the filter media will not develop zones of increased resistance to the flow of the bilge water relative to the rest of the filter media. This has the effect of achieving an even flow through the whole of the filter media and as a result an efficient use of the whole of the filter media.

In some embodiments of the present invention the filter apparatus is further comprised of a filter body, the filter body comprising a filter body inlet and a filter body outlet, the filter body is configured to reversibly receive and contain the filter housing, the filter body is so configured that when the filter housing is received and contained within the filter body the filter body inlet is in fluid communication with the housing inlet, the filter body outlet is in fluid communication with the housing outlet, and the flow path for bilge water passing from the filter body inlet to the filter body outlet passes through the filter media.

It is preferred in some embodiments that the filter housing may be easily and reversibly placed into and removed from the filter body. This will allow the filter housing to be replaced once the absorption / adsorption capacity of the filter media within the filter housing has been reached. This is advantageous because the filter media / hydrocarbons are contained in the filter housing and can be removed from the boat and transported to a place of disposal without risk of potential harm to the environment as a result of a spill of the filter media / hydrocarbons or potential harm to a person as a result of contact with the filter media / hydrocarbons.

In some embodiments of the present invention the filter housing comprises one or more walls that collectively define a volume, a housing inlet configured to allow bilge water to enter the volume, a housing outlet configured to allow bilge water to exit the volume, and at least one closable aperture configured to allow introduction and extraction of filter media into and out of the volume.

In some embodiments of the present invention, the filter housing has a longitudinal extent, and the housing inlet is located at or adjacent one end of that longitudinal extent and the housing outlet is at or adjacent the other end of that longitudinal extent. In some embodiments, the filter housing may define a volume that is substantially cylindrical or a prism. In some such embodiments the portion of the filter housing that defines one of the ends of the cylinder / prism is in the form of a reversibly removable cap to allow introduction and extraction of filter media into and out of the volume.

In some embodiments of the present invention the filter housing contains the filter media and at least one media retaining means.

In embodiments including one or more media retaining means the media retaining means may be located between the mouth of the housing inlet and or housing outlet and the interior of the filter housing. Location of the media retaining means in that or those positions is desirable because the media retaining means will prevent the filter media blocking one or both of the mouths of the housing inlet and / or housing outlet into the interior of the filter housing.

The media retaining means preferably comprises a course mesh with a mesh size smaller than the D20, D30, D40, or D50 size of the smallest dimension of the particulates, grains or other shapes of the filter media. The mesh may be an essentially two-dimensional mesh or a two or three-dimensional non-woven fibrous material. In some embodiments, the mesh is of a material that will not react with water or hydrocarbons, for example a plastics mesh. It is desirable that the media retaining means has a mesh size sufficiently large that the media retaining means does not act a filter for the bilge water.

According to a second aspect of the present invention there is provided a boat comprising a hull, a bilge located within the hull, a pump having an inlet port and an outlet port, at least one conduit extending between the bilge and a discharge mouth of a conduit, and a filter apparatus as described above, characterised in that the at least one conduit, pump, and filter apparatus together define a flow path for the bilge water from the bilge to the discharge mouth of the conduit. The pump is, in some embodiments of the present invention, a bilge pump for the boat.

According to a third aspect of the present invention there is provided a kit comprising a filter apparatus as described above and a set of instructions. The kit may, in some embodiments, be used for fitting the apparatus of the first aspect of the present invention to an existing boat.

The kit may further include a pump for liquids and sufficient conduits to allow a user to use the pump, filter apparatus of the present invention, and conduits to empty the bilge or other compartment of the boat of hydrocarbon contaminated water via the filter apparatus.

According to a fourth aspect of the present invention there is provided a method of emptying water contaminated with hydrocarbons from a boat without damaging the environment by the discharge of hydrocarbons, the method comprising using a pump to transport water contaminated with hydrocarbons via a conduit to the filter body inlet of a filter apparatus according to the present invention, through the filter apparatus, and out of the filter body outlet. Dependent on the location of the filter apparatus, the cleaned bilge water may be caused to flow through the filter body outlet into a further conduit and then through the conduit to a discharge mouth of the conduit.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

The present invention will be further described and explained by way of example and with reference to the accompanying drawings in which:
Figure 1 shows a schematic view of a boat including an embodiment of a filter apparatus according to the present invention;
Figure 2 shows an enlarged view of a portion of the boat of figure 1; and
Figure 3 shows a schematic view of an embodiment of a filter apparatus according to the present invention.

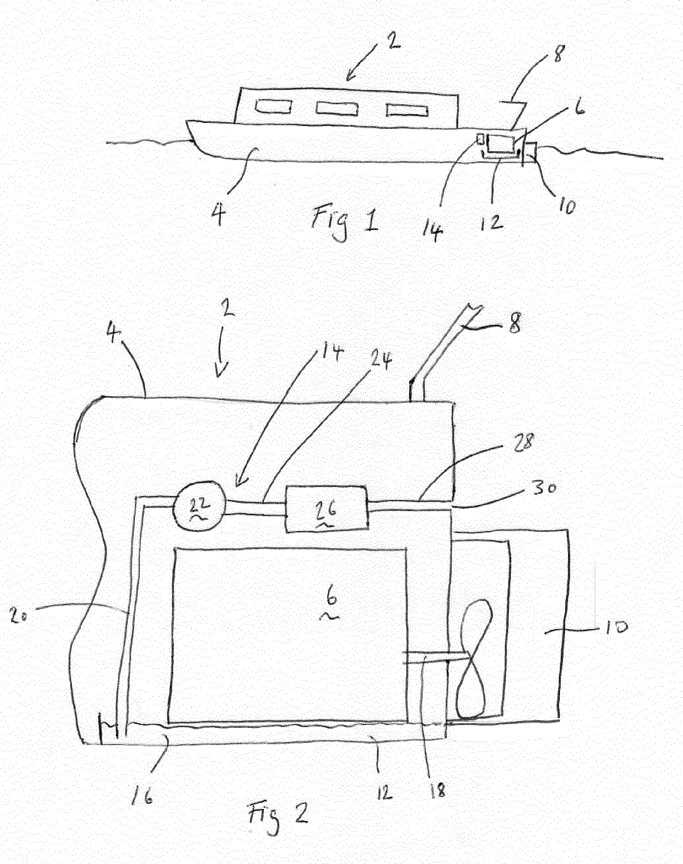

With reference to Figure 1, a boat (2) has a hull (4) and an engine (6). The direction of travel of the boat (2) is controlled by a user (not shown) using a tiller (8) and a rudder (10). The user of the boat also controls the engine's speed and hence the speed of the boat (2) using a speed control (not shown).

With reference to Figures 1, 2 and 3, the boat (2) is provided with a bilge (12) located under the engine (6). Bilge emptying apparatus (14) is adapted to empty bilge water (16) out of the bilge either automatically or when the user activates the bilge emptying apparatus (14). The bilge water (16) is likely to be a mixture of water that enters the boat, for example seepage around propeller shaft (18), and oil, fuel, solvents and or grease that have leaked out of the engine (6) and packing around the propeller shaft (18) respectively.

The bilge emptying apparatus (14) is comprised of a first conduit (20), a bilge pump (22), a second conduit (24), a filter apparatus (26) and a third conduit (28). The first conduit (20) has a first mouth in the bilge water (16) present in the bilge (12). The second end of the first conduit (20) is in fluid communication with an input port (not shown) of bilge pump (22). An output port (not shown) of the bilge pump (22) is in fluid communication with a filter body inlet (42) of the filter apparatus (26) via the second conduit (24). A filter body outlet (44) of the filter apparatus (26) is in fluid communication with a discharge port (30) via the third conduit (28).

The filter apparatus (26) is comprised of a filter body (40) which is comprised of a filter body base (40a) and a filter body lid (40b). Filter body base (40a) and a filter body lid (40b) are reversibly joined by an inter engaging treaded region (40c). They can be separated by unscrewing filter body base (40a) from filter body lid (40b). Filter body inlet (42) and filter body outlet (44) both form part of filter body lid (40b).

The filter apparatus (26) is further comprised of a filter housing (50) which is comprised of a filter housing base (50a) and a filter housing lid (50b). Filter housing base (50a) and a filter housing lid (50b) are reversibly joined by an inter engaging treaded region (50c). They can be separated by unscrewing filter housing base (50a) from filter housing lid (50b). A housing inlet (52) is located at the end of the filter housing base (50a) remote from the filter housing lid (50b), and a housing outlet (54) is part of filter housing lid (50b).

The housing inlet (52) is comprised of a number of perforations through the wall of the filter housing base (50a) remote from the filter housing lid (50b). The perforations are sufficiently large that they will not act as a filter to the bilge water (18).

The housing outlet (54) is comprised of a port adapted to be reversibly engaged with a filter body conduit (46). The end of the filter body conduit (46) remote from the filter housing (50) is the filter body outlet (44).

The filter housing (50) defines a volume within which is located a filter media (60) and a first and second media retaining means (62, 64). The first and second media retaining means (62, 64) overlie the housing outlet (54) and the housing inlet (52) respectively. Each of the first and second media retaining means (62, 64) is a course mesh of a plastics material that will not react with water or hydrocarbons. It is preferred that the mesh size is such that the filter media does not pass into the mesh. It is desirable that the media retaining means does not act a filter for the bilge water.

When the filter apparatus (26) is configured for use the filter body base (40a) is substantially vertically below the filter body lid (40b).

The filter housing (50) is dimensioned and configured so that it when the housing outlet 54 is in engagement with the filter body conduit (46), the filter housing base (40a) can be in engagement with the filter housing lid (40b). When the filter housing base (40a) is not in engagement with the filter housing lid (40b) the filter housing (50) can be disengaged from the filter body conduit (46). This means that once the filter media (60) has reached capacity in its sorption of hydrocarbons the filter housing (50) can be replaced as a whole. This keeps the filter media / hydrocarbons mix in a safe container and stops the person changing the filter housing from having to come into contact with that mix or, any subsequent risk of environmental contamination deriving from transportation and disposal of this mix.

The filter housing base (50a) and a filter housing lid (50b) are reversibly joined by an inter engaging treaded region (50c) with the result that they can be separated by unscrewing filter housing base (50a) from filter housing lid (50b). This means that once the once the filter media (60) has reached capacity in is sorption of hydrocarbons and the filter housing (50) has been removed from the filter apparatus (26), the filter media / hydrocarbons mix can be easily removed from the filter housing for disposal or treatment. Fresh filter media (60) can then be placed in the filter housing (50) along with first and second media retaining means (62, 64). Filter housing base (50a) and a filter housing lid (50b) can then be reversibly joined by screwing filter housing base (50a) onto filter housing lid (50b). The filter housing (50) can then be reused.

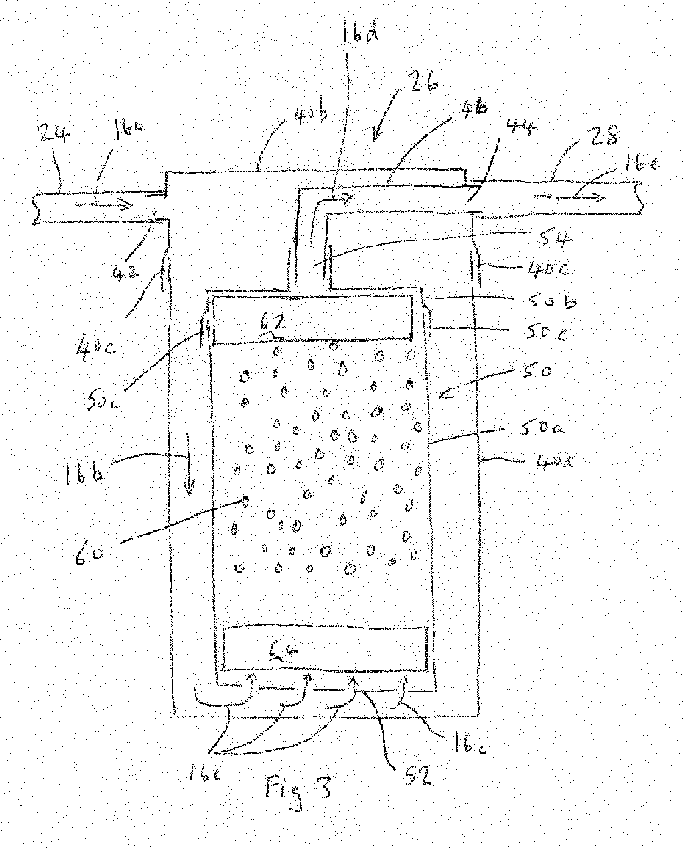

In use, operation of the bilge pump (22) will cause bilge water (16) to be sucked up conduit (20) and through the bilge pump (22). The bilge water will then be pushed along the second conduit (24) and into the filter body (40) via the filter body inlet (42). The flow path of the bilge water (16) through the filter apparatus (26) is shown by the arrows (16a, 16b, 16c, 16d, 16e) of Figure 3. As illustrated in Figure 3, the filter media (60) is buoyant and it floats toward the first media retaining means (62). This has the effect that the filter media (60) does not become compacted and restrictive of the flow of the bilge water (16).

When the bilge water (16) passes through the granular filter media (60), hydrocarbons in the bilge water will be sorbed into / onto the filter media and substantially hydrocarbon free water will flow out of the filter housing via the housing outlet (54). The now cleaned bilge water is then pushed along the third conduit (28) until it is discharged from the boat via the discharge port (30).

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

## Claims

1. A filter apparatus for the cleaning of hydrocarbons from bilge water whilst that bilge water is being discharged from a boat comprising a filter media and a filter housing, **characterised in that** the filter media is buoyant, the filter media is sorbent of hydrocarbons, the filter media is contained within the filter housing, the filter apparatus is configured so that untreated bilge water may flow into the filter housing via a housing inlet, through the filter media, and out of the filter housing via a housing outlet, and the filter media is buoyant within the filter housing when there is water passing through the filter housing.

2. An apparatus according to claim 1 in which the filter media is **characterised in that** sorption of hydrocarbons by the filter media renders the hydrocarbons non-reactive with the environment.

3. An apparatus according to claim 1 or 2 in which the filter media comprises one or more of calcium carbonate, calcium oxide, bentonite clay, starch, aluminium oxide and a binder.

4. An apparatus according to any of claims 1 to 3 in which the filter media is a silica sand coated with a mixture of calcium carbonate, calcium oxide, bentonite clay, starch, aluminium oxide and bitumen.

5. An apparatus according to any of claims 1 to 4 in which the filter media is one or more of compostable ,combustible, or usable as a construction material.

6. An apparatus according to any of claims 1 to 5 in which the filter apparatus is so configured that when it is in use, the housing inlet is vertically lower than the housing outlet.

7. An apparatus according to any of claims 1 to 6 in which the filter apparatus is further comprised of a filter body, the filter body comprises means to reversibly receive and contain the filter housing, a filter body inlet and a filter body outlet, the filter body is so configured that when the filter housing is received and contained within the filter body the filter body inlet is in fluid communication with the housing inlet, the filter body outlet is in fluid communication with the housing outlet, and the flow path for bilge water passing from the filter body inlet to the filter body outlet passes through the filter media.

8. An apparatus according to any of claims 1 to 7 in which the filter housing comprises one or more walls that collectively define a volume, a housing inlet configured to allow bilge water to enter the volume, a housing outlet configured to allow bilge water to exit the volume, and at least one closable aperture configured to allow introduction and extraction of filter media into and out of the volume.

9. An apparatus according to claim 8 in which the filter housing has a longitudinal extent, and the housing inlet is located at or adjacent one end of that longitudinal extent and the housing outlet is at or adjacent the other end of that longitudinal extent.

10. An apparatus according to claim 9 in which the filter housing defines a volume that is substantially cylindrical or a prism, and the portion of the filter housing that defines one of the ends of the cylinder or prism is in the form of a reversibly removable cap to allow introduction and extraction of filter media into and out of the volume.

11. An apparatus according to any of claims 1 to 10 in which the filter housing contains the filter media and at least one media retaining means.

12. An apparatus according to claim 11 in which the media retaining means comprises a course mesh and is a two-dimensional mesh or a two or three-dimensional non-woven fibrous material.

13. A boat comprising a hull, a bilge located within the hull, a pump having an inlet port and an outlet port, at least one conduit extending between the bilge and a discharge mouth of a conduit, and a filter apparatus according to any of claims 1 to 12, **characterised in that** the at least one conduit, pump, and filter apparatus together define a flow path for the bilge water from the bilge to the discharge mouth of the conduit.

14. A kit comprising a filter apparatus according to any of claims 1 to 12, and one or more of a set of instructions; and a pump for liquids and sufficient conduits to allow a user to use the pump, filter apparatus, and conduits to empty the bilge or other compartment of the boat of hydrocarbon contaminated water via the filter apparatus.

15. A method of emptying water contaminated with hydrocarbons from a boat without damaging the environment by the discharge of hydrocarbons into the environment, the method comprising using a pump to transport water contaminated with hydrocarbons via a conduit to the filter body inlet of a filter apparatus according to any of claims 1 to 12, through the filter apparatus, and out of the filter body outlet.
